# FASCICULE DE BREVET EUROPEEN

(11) **EP 2 780 574 B1**
(45) Date de publication et mention de la délivrance du brevet: **23.03.2016**
(21) Numéro de dépôt: 12787791.8
(22) Date de dépôt: 22.10.2012
(51) Int. Cl.: F02K 1/70, F02K 1/76

(54) **INVERSEUR DE POUSSÉE À PORTES JUMELLES**
SCHUBUMKEHRVORRICHTUNG MIT DOPPELTÜREN
THRUST REVERSER HAVING TWIN DOORS

(30) Priorité: 09.11.2011 FR 1103406
(43) Date de publication de la demande: 24.09.2014
(73) Titulaire: Aircelle, 76700 Gonfreville l'Orcher (FR)
(72) Inventeur: GONIDEC, Patrick, F-31530 Bretx (FR)
(74) Mandataire: Gaillarde, Frédéric F. Ch.
(86) Numéro de dépôt international: PCT/FR2012/052409
(87) Numéro de publication internationale: WO 2013/068664

(56) Documents cités:
- EP-A1- 0 836 000
- EP-A1- 0 882 883
- WO-A2-2005/040589
- US-A- 3 739 582

## Description

La présente demande de brevet se rapporte à un inverseur de poussée à portes jumelles.

Un inverseur de poussée selon la technique antérieure est connu dans le document WO2005/040589 A2.

On connaît de la technique antérieure, et notamment de la demande de brevet FR2754565, un inverseur de poussée à portes jumelles, chaque paire de portes jumelles comprenant une porte amont et une porte aval.

Un tel inverseur de poussée permet un grand débit de fuite de l'air froid circulant à l'intérieur de la nacelle, et donc un freinage d'autant plus efficace de l'aéronef à l'atterrissage.

Dans un tel inverseur de poussée, on doit prévoir un certain nombre de verrous assurant une redondance afin de supprimer tout risque d'ouverture intempestive des portes.

Plus précisément, pour respecter les règles de sécurité en vigueur, trois systèmes de verrouillage indépendants doivent être prévus pour chaque porte amont et aval de chaque paire de portes jumelles.

Un premier système de verrouillage comprend un verrou solidaire du cadre avant de l'inverseur de poussée, et coopérant avec la porte amont de la paire de portes jumelles.

La porte aval étant reliée par une paire de bielles à la porte amont, ce premier système de verrouillage assure aussi le verrouillage de la porte aval.

Un deuxième système de verrouillage comprend un système de synchronisation de l'ouverture de portes adjacentes, tel que celui divulgué par la demande de brevet FR2823259 : un tel système permet d'empêcher l'ouverture d'une porte amont (et donc de sa porte aval associée) tant qu'une porte amont adjacente n'est elle-même pas ouverte.

Un troisième système de verrouillage coopère directement avec le vérin d'actionnement de la porte amont.

Dans un tel agencement, il y a donc deux systèmes de verrouillage commandés par paire de porte jumelles : le premier et le troisième systèmes susmentionnés ; seul le deuxième système de verrouillage est passif, et ne nécessite donc aucun moyen de commande.

Ainsi, pour un inverseur de poussée à portes jumelles comprenant typiquement quatre paires de portes jumelles, il faut prévoir 8 verrous commandés, ce qui est lourd, complexe et coûteux tant à l'installation qu'à la maintenance.

La présente invention a ainsi notamment pour but d'apporter une simplification des moyens de verrouillage d'un tel inverseur de poussée.

On atteint ce but de l'invention avec un inverseur de poussée pour nacelle de turboréacteur d'aéronef, comprenant :
- au moins une paire de portes jumelles comprenant une porte amont, une porte aval reliée par au moins une bielle à la porte amont, et
- au moins un vérin d'actionnement de la porte amont, entre une position « jet direct » dans laquelle ces deux portes sont fermées, et une position « jet inversé » dans laquelle ces deux portes sont ouvertes et aptes à défléchir au moins une partie du flux d'air froid susceptible de circuler à l'intérieur de la nacelle,
cet inverseur de poussée étant remarquable en ce qu'il comprend des moyens pour verrouiller/déverrouiller lesdites portes amont et aval entre elles sous la seule action dudit vérin.

Le verrouillage des portes amont et aval entre elles constitue un système de verrouillage indépendant des premier et deuxième systèmes de verrouillage susmentionnés, ne nécessitant donc aucun moyen de commande spécifique puisque ce sont les seuls mouvements du vérin à l'ouverture et à la fermeture des portes qui permettent de réaliser leur verrouillage/déverrouillage.

On obtient de la sorte trois systèmes de verrouillage indépendants pour la paire de portes jumelles, ne comprenant qu'un seul verrou commandé : celui du premier système de verrouillage susmentionné.

Ainsi, pour un inverseur de poussée comprenant quatre paires de portes jumelles, seuls quatre verrous commandés sont nécessaires, ce qui apporte un allègement, une simplification et une réduction des coûts tout à fait considérables.

Suivant d'autres caractéristiques optionnelles de l'inverseur de poussée selon l'invention :
- lesdits moyens de verrouillage/déverrouillage comprennent :
   - un crochet monté pivotant sur ladite porte amont, entre une position de verrouillage d'un pion solidaire de ladite porte aval, et une position de déverrouillage de ce pion,
   - des moyens de rappel élastique dudit crochet vers sa position de verrouillage,
   - un loquet monté pivotant sur ladite porte amont entre une position de blocage dans laquelle il maintient ledit crochet dans sa position de verrouillage, et une position de déblocage, dans laquelle il autorise le passage dudit crochet de sa position de verrouillage à sa position de déverrouillage,
   - des moyens de rappel élastique dudit loquet vers sa position de blocage,
   - ledit vérin et ledit loquet étant agencés l'un par rapport à l'autre de sorte qu'une extension dudit vérin fasse pivoter ledit loquet vers sa position de déblocage ;
- ledit crochet et ledit loquet sont montés pivotants autour d'axes sensiblement perpendiculaires aux axes de rotation des portes amont et aval et à l'axe de la nacelle ;
- ledit crochet et ledit loquet sont montés pivotants autour d'axes sensiblement parallèles aux axes de rotation des portes amont et aval ;
- ledit crochet est monté pivotant autour d'un axe sensiblement parallèle à l'axe de la nacelle, et ledit loquet est monté pivotant autour d'un axe sensiblement perpendiculaire aux axes de rotation des portes amont et aval et à l'axe de la nacelle;
- lesdits moyens de verrouillage/déverrouillage comprennent :
   - un pêne monté coulissant dans ladite porte amont, entre une position de verrouillage d'une gâche formée dans ladite porte aval, et une position de déverrouillage de cette gâche,
   - des moyens de rappel élastique dudit pêne vers sa position de verrouillage,
   - un loquet monté pivotant sur ladite porte amont et coopérant avec ledit pêne de sorte qu'une rotation de ce loquet ait pour effet de faire coulisser ce pêne,
   - ledit vérin et ledit loquet étant agencés l'un par rapport à l'autre de sorte qu'une extension dudit vérin fasse pivoter ladite gâchette dans un sens provoquant le coulissement dudit pêne vers sa position de déverrouillage ;
- lesdits moyens de verrouillage/déverrouillage comprennent en outre un étrier monté pivotant sur ladite porte amont autour d'un axe sensiblement parallèle aux axes de rotation desdites portes amont et aval, et des moyens élastiques rappelant cet étrier vers une position dans laquelle il assure le maintien dudit pêne dans sa position de déverrouillage ;
   - ladite porte aval comprend un organe d'appui, apte à faire pivoter ledit étrier à l'encontre desdits moyens élastiques.
   - lesdits moyens de verrouillage/déverrouillage comprennent :
      - un crochet monté pivotant sur ladite porte aval, entre une position de verrouillage d'un pion solidaire de la structure fixe dudit inverseur, et une position de déverrouillage de ce pion,
      - des moyens de rappel élastique dudit crochet vers sa position de verrouillage,
      - un loquet monté pivotant sur ladite porte aval entre une position de blocage dans laquelle il maintient ledit crochet dans sa position de verrouillage, et une position de déblocage, dans laquelle il autorise le passage dudit crochet de sa position de verrouillage à sa position de déverrouillage,
      - des moyens de rappel élastique dudit loquet vers sa position de blocage,
      - un câble dont une extrémité est montée coulissante sur ladite porte amont, et dont l'autre extrémité est reliée audit loquet, de sorte qu'une extension dudit vérin provoque le coulissement dudit câble par rapport à ladite porte amont, et ainsi la rotation dudit loquet vers sa position de déblocage.

La présente invention se rapporte également à une nacelle équipée d'un inverseur de poussée conforme à ce qui précède.

D'autres caractéristiques et avantages de la présente invention apparaîtront à la lecture de la description qui va suivre, et à l'examen des figures ci-annexées, dans lesquelles :
- la figure 1 représente de manière schématique un inverseur à portes jumelles dans une configuration « jet direct »,
- la figure 2 représente cet inverseur en configuration «jet inversé »,
- la figure 3 représente une vue d'ensemble de deux portes jumelles munies d'un système de verrouillage conforme à un premier mode de réalisation de l'invention,
- les figures 4 à 10 représentent ce système de verrouillage dans ses différentes positions de fonctionnement,
- la figure 11 est un schéma de principe du circuit d'actionnement de quatre portes jumelles d'un inverseur de poussée, un dispositif de verrouillage conforme à ce qui précède étant disposé entre les portes de chaque paire de portes jumelles,
- les figures 12 à 15 illustrent un deuxième système de verrouillage selon l'invention, dans ses différentes positions de fonctionnement,
- les figures 16a, 16b, 16c, 16d illustrent un troisième mode de réalisation du système de verrouillage selon l'invention, représenté sous différents angles de vue,
- les figures 17a à 17d, 18a à18d, 19a à 19d, et 20a à 20c illustrent ce même système de verrouillage dans ses différentes positions de fonctionnement,
- les figures 21a, 21b, 21c illustrent un quatrième mode de réalisation du système de verrouillage selon l'invention, représenté selon différents angles de vue,
- les figures 22a, 22b, 22c ; 23a, 23b, 23c ; 24a, 24b, 24c et 25a, 25b, 25c illustrent ce système de verrouillage dans ses différentes positions de fonctionnement,
- la figure 26 est une figure analogue à la figure 3, illustrant un cinquième mode de réalisation d'un système de verrouillage selon l'invention,
- la figure 27 représente ce système de verrouillage dans sa partie qui se trouve dans la porte amont, et
- les figures 28 à 33 représentent ce système de verrouillage dans la zone qui se trouve dans la partie aval, dans différentes positions de fonctionnement.

Sur l'ensemble de ces figures, des références identiques ou analogues désignent des organes ou ensembles d'organes identiques ou analogues.

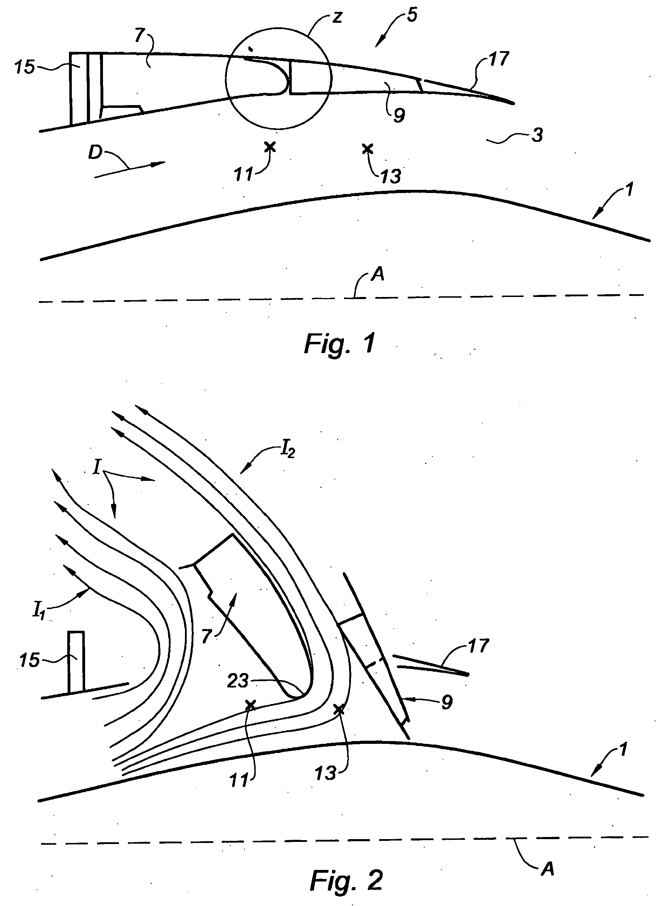

On se reporte à la figure 1, sur laquelle on peut voir une structure interne fixe de nacelle, destinée à caréner un turboréacteur d'aéronef (non représentée).

L'axe A de ce turboréacteur est indiqué en pointillé sur les figures 1 et 2, la partie amont de ce turboréacteur se trouvant à gauche des figures, et la partie aval sur la droite de ces figures.

Comme cela est connu en soi, la structure interne fixe 1 peut techniquement être formée en matériau composite, et peut présenter des caractéristiques d'absorption acoustique destinées à minimiser le bruit provoqué par la circulation du flux d'air froid dans la veine d'air froid 3.

Cette veine d'air froid 3, sensiblement annulaire, est définie d'une part par la structure fixe interne 1, et d'autre part par la partie périphérique de la nacelle, comportant classiquement un dispositif d'inversion de poussée 5.

Comme cela est connu en soi, un tel dispositif d'inversion de poussée est mobile entre la configuration visible à la figure 1, dite « jet direct », dans laquelle le flux d'air froid D circule à l'intérieur de la veine 3 de l'amont vers l'aval de la nacelle, et la configuration visible de la figure 2, dite de « jet inversé » dans laquelle le flux d'air froid I est rejeté vers l'amont de la nacelle, de manière à exercer un effort de contre-poussée.

La configuration de « jet direct » correspond aux situations de décollage et de vol de croisière de l'aéronef, et la situation de « jet inversé » correspond à la situation d'atterrissage de l'aéronef, dans laquelle on cherche à minimiser la distance de freinage.

Plus particulièrement, dans le cadre de la présente invention, le dispositif d'inversion de poussée 5 est du type à portes jumelles.

Ceci signifie que la déflexion du flux d'air froid vers l'amont de la nacelle est obtenue au moyen de deux portes, respectivement amont 7 et aval 9, articulées autour d'axes de rotation respectifs 12 et 13.

Il faut bien entendu comprendre que plusieurs paires de telles portes jumelles peuvent être prévues à la périphérie de la nacelle, une seule telle paire étant toutefois représentée sur les figures ci-annexées dans un souci de simplification.

La porte amont 7 s'étend entre le cadre avant 15, qui est une partie fixe de la nacelle, et la porte aval 9.

Cette porte aval 9 s'étend entre la porte amont 7 et le bord arrière 17 de la nacelle.

Dans la configuration de la figure 1, les deux portes 7 et 9 sont fermées, obligeant ainsi le flux d'air froid D entrainé par la soufflante du turboréacteur (non représentée) à circuler à l'intérieur de la veine d'air froid 3, assurant ainsi la poussée nécessaire à la propulsion de l'aéronef (configuration « jet direct »).

Il est à noter que la porte aval 9 comporte, sur son bord amont extérieur, une peau qui avance jusqu'au bord aval extérieur de la porte amont 7, assurant ainsi la continuité aérodynamique de l'extérieur de la nacelle.

Lorsque l'on souhaite inverser la poussée de la nacelle, et donc passer en configuration « jet inversé », on ouvre les deux portes 7 et 9 en les faisant pivoter autour de leurs axes respectifs 11 et 13, de manière à les amener jusqu'à leur position visible à la figure 2.

Dans cette configuration, une partie I1 du flux d'air froid circulant à l'intérieur de la veine 3 est défléchie vers l'amont de la nacelle par la porte amont 7.

Une autre partie I2 du flux d'air froid passe entre le bord aval 23 de la porte amont 7 et la structure interne fixe 1 de la nacelle 1, puis est défléchie par la porte aval 9 qui elle obture complètement la veine d'air froid 3.

Dans ce qui suit, on va décrire un système de verrouillage des portes amont 7 et aval 9 qui se trouve dans la zone Z indiquée à la figure 1.

Pour effectuer cette description, une utilisera les directions d'un trièdre XYZ, dans lequel la direction X est sensiblement parallèle à l'axe A de la nacelle, Y est sensiblement parallèle aux axes d'articulation 11,13 des portes amont 7 et aval 9, et Z est perpendiculaire aux directions X et Y.

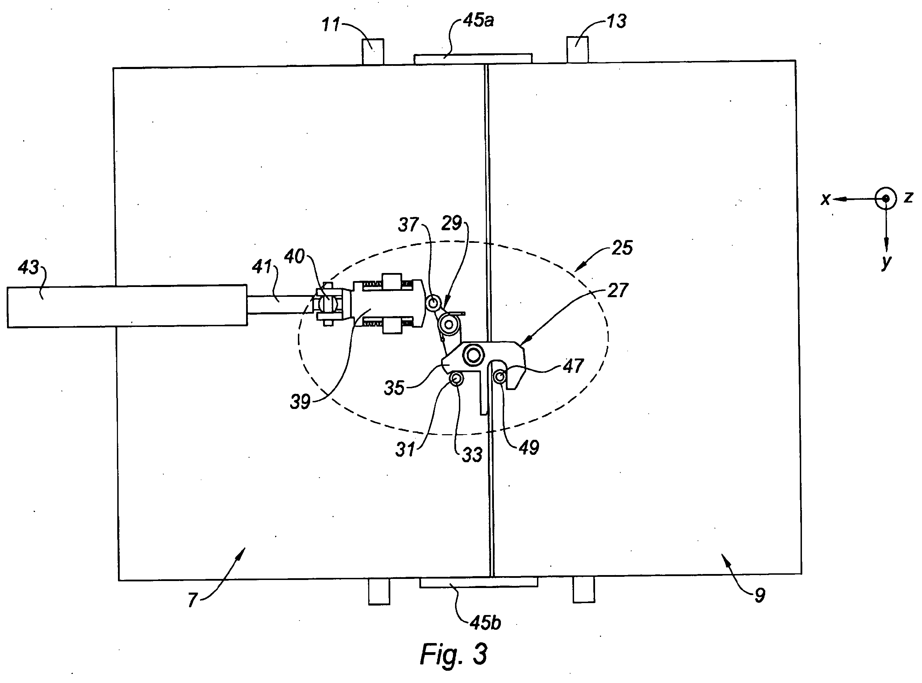

En se reportant à la figure 3, on peut voir que le système de verrouillage 25 selon l'invention comprend un crochet 27 monté pivotant sur la porte amont 7 autour d'un axe de direction Z.

Un loquet de blocage 29 est lui-même monté pivotant sur la porte amont 7 autour d'un autre axe de direction Z.

Ce loquet de blocage 29 comporte une queue 31 terminée par un galet 33, cette queue étant elle-même susceptible de coopérer avec une queue 35 du crochet 27, de manière à empêcher la rotation de ce dernier.

Le loquet 29 comporte en outre une tête 37 susceptible d'être poussée par un coulisseau 39, monté coulissant sur l'intrados de la porte amont 7, et relié par une articulation 40 à l'extrémité de la tige 41 d'un vérin hydraulique ou électrique 43, lequel vérin permet de faire passer la porte amont 7 de sa position fermée (« jet direct » - figure 1) à sa position ouverte (« jet inversé » - figure 2).

A noter que la porte aval 9 est reliée à la porte amont 7 par une paire de bielles 45a, 45b, agencée de sorte que l'ouverture/fermeture de la porte amont entraîne l'ouverture/fermeture de la porte aval 9.

Le crochet 27 coopère avec un pion 47 s'étendant sensiblement selon la direction Z, solidaire du capot coulissant, entouré de préférence d'un galet 49.

Des ressorts spirales 51, 53, centrés respectivement sur les axes de rotation du crochet 27 et du loquet 29, ont tendance à faire pivoter respectivement ces deux organes dans des sens horaire et anti horaire.

Des rondelles Belleville 54a, 54b assurent une élasticité et un amortissement des mouvements du coulisseau 39 par rapport à la porte amont 7. Sans action du vérin 41 sur le coulisseau 39, les ressorts 54a et 54b sont avantageusement réglés afin que le ressort 54b garde le coulisseau 39 éloigné du galet 37, afin de préserver le verrouillage en cas de rupture d'un vérin 41.

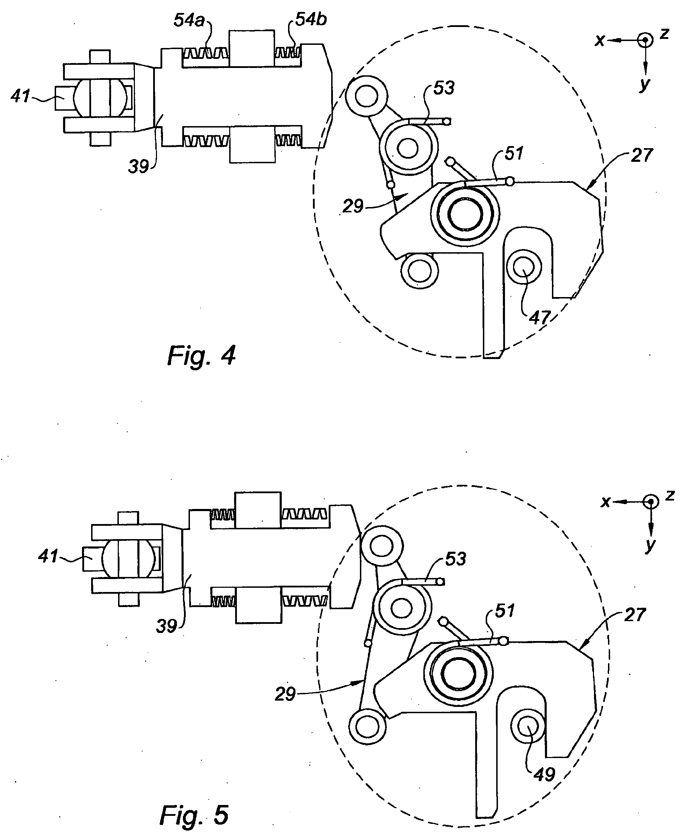

Le mode de fonctionnement du système de verrouillage qui vient d'être décrit va à présent être explicité à la lumière des figures 4 à 10.

Lorsque l'on se trouve en configuration « jet direct », le crochet 27 est fermé sur le pion 47, comme cela est visible à la figure 4, la queue 31 du loquet 29 empêche toute rotation de ce crochet 27, et donc toute ouverture intempestive des portes amont 7 et aval 9. Il est à noter qu'il n'y a pas de contact entre le couliseau 39 et le galet 37 du loquet 29.

Lorsque l'on souhaite passer en configuration «jet inversé » (figure 2), on agit sur le vérin 43 de manière que sa tige 41 s'allonge, et provoque ainsi le coulissement du coulisseau 39 par rapport à la porte amont 7, à l'encontre de l'élasticité des rondelles Belleville 54a.

Ce faisant, comme cela est visible à la figure 5, l'extrémité du coulisseau 39 agit sur la tête 37 du loquet 29, à l'encontre du ressort spirale 53, de sorte que la queue 31 de ce loquet 29 libère la queue 35 du crochet 27.

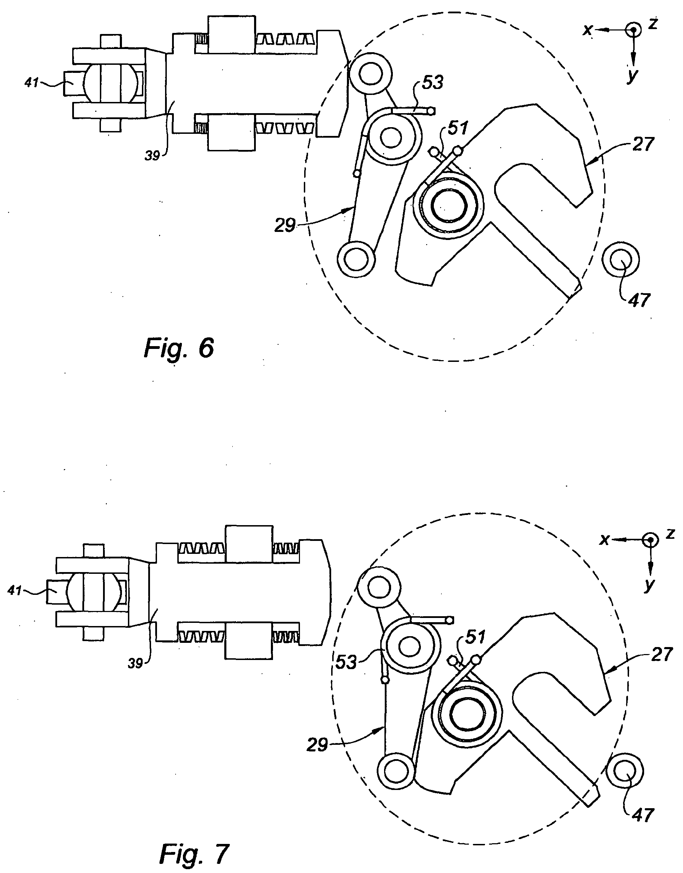

Ainsi, comme cela est visible à la figure 6, sous l'effet du ressort spirale 51, le crochet 27 pivote dans le sens anti horaire, libérant ainsi le pion 47 de la porte aval 9.

Ainsi, sous l'effet de l'extension de la tige 41 du vérin 43, les deux portes amont 7 et aval 9 reliées entre elles par les bielles 45a et 45b peuvent pivoter vers leur position d'ouverture représentée à la figure 2, permettant de renvoyer le flux d'air froid vers l'avant de la nacelle, et ainsi de réaliser la fonction d'inversion de poussée.

Lorsque l'on souhaite alors retourner vers la positon « jet direct » (figure1), on rétracte la tige 41 du vérin 43, ce qui a pour effet notamment de ramener le pion 47 de la porte aval 9 à l'intérieur du crochet 27 (voir figure 7).

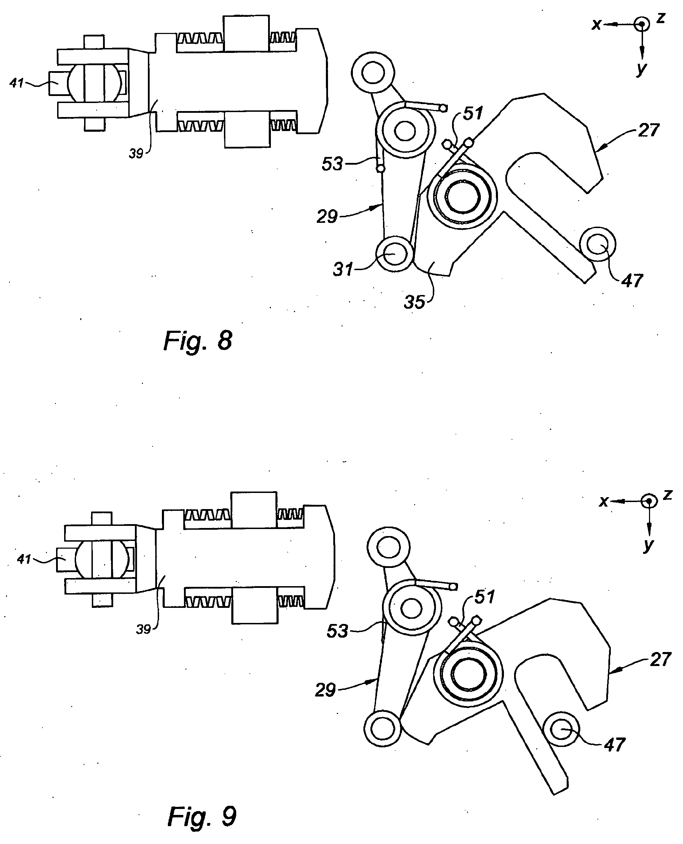

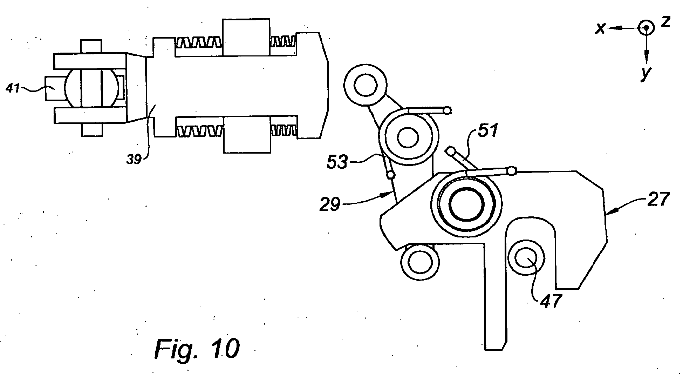

Ce faisant, le pion 47 finit par buter contre le crochet 27 et fait pivoter ce dernier dans le sens horaire, à l'encontre du ressort spirale (figures 8 et 9), et ce, jusqu'à ce que la queue 35 du crochet 27 franchisse la queue 31 du loquet 29, permettant le retour de ce loquet dans sa position initiale (figure 10) : on se retrouve alors dans la configuration où ce crochet 27 bloque tout mouvement relatif des portes amont 7 et aval 9, réalisant ainsi un verrouillage de sécurité totalement indépendant des autres systèmes de verrouillage.

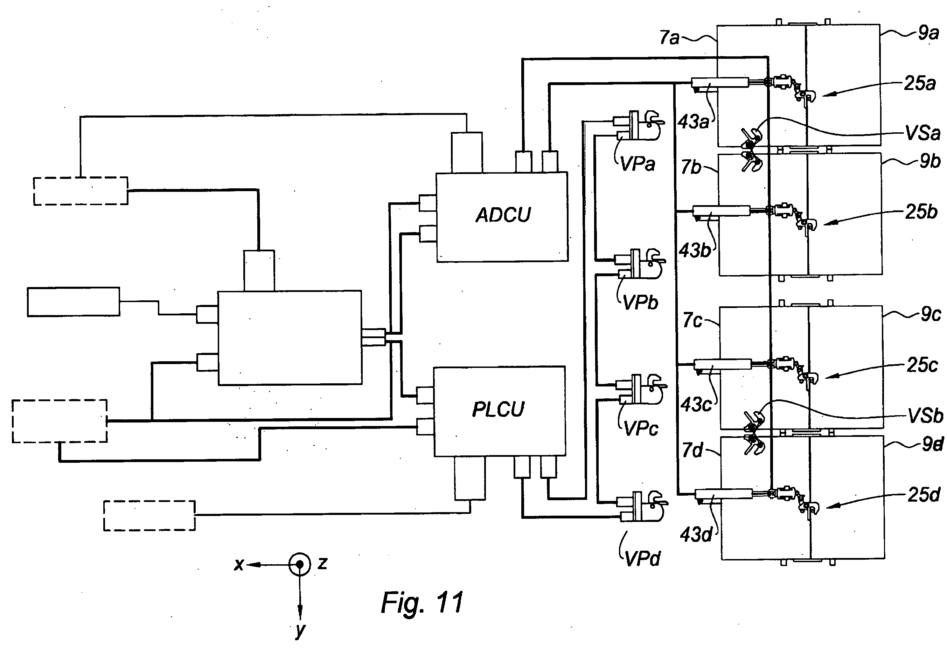

En se reportant à la figure 11, on peut voir de manière synthétique les circuits d'actionnement et de verrouillage de quatre portes jumelles d'un même inverseur de poussée, équipées notamment d'un système de verrouillage tel que celui qui vient d'être décrit.

Comme on peut le voir sur cette figure 11, chaque porte amont 7a, 7b, 7c, 7d est actionnée par un vérin respectif 43a, 43b, 43c, 43d, lequel est susceptible d'agir sur un système de verrouillage respectif 25a, 25b, 25c, 25d, disposé entre les portes amont 7a, 7b, 7c, 7d et aval 9a, 9b, 9c, 9d, conformément à l'explication qui vient d'être donnée.

Comme cela a été mentionné plus haut, ces systèmes de verrouillage 25a, 25b, 25c, 25d sont indépendants de deux autres systèmes de verrouillage, permettant de se prémunir de toute ouverture intempestive des portes jumelles.

Pour chaque paire de portes jumelles, il y a en effet d'une part un système de verrouillage dit « primaire » VPa, VPb, VPc, VPd, agissant directement sur les portes amont 7a, 7b, 7c, 7d, commandées par une unité de contrôle spécifique PLCU (« Primary Lock Control Unit » : unité de commande des verrous primaires »).

Par ailleurs, des verrous de synchronisation VSa et VSb sont disposés entre deux portes amont adjacentes, d'une part 7a, 7b et d'autre part 7c, 7d, empêchant l'ouverture d'une porte amont tant que sa porte amont adjacente n'est elle-même pas ouverte : un tel système est connu en soi notamment du brevet FR 2 823 259, elle ne sera donc pas décrite plus en détails ici.

Comme on peut le voir à la figure 11, l'unité de commande ADCU (« Actuator Directional Control Unit » : unité de commande des actionneurs) des vérins 43a, 43b, 43c, 43d, est totalement indépendante de l'unité de commande PLCU, de sorte que les trois systèmes de verrouillage qui viennent d'être décrits (25, VP, VS) sont totalement indépendants les uns des autres, garantissant ainsi la parfaite sécurité du verrouillage des portes de l'inverseur de poussée en position « jet direct ».

On notera par ailleurs que les différentes positions axiales de ces trois systèmes de verrouillage offrent un maximum de sécurité vis-à-vis d'accidents pouvant survenir à l'intérieur de la nacelle, tels qu'une rupture de disque du moteur (« rotor burst »).

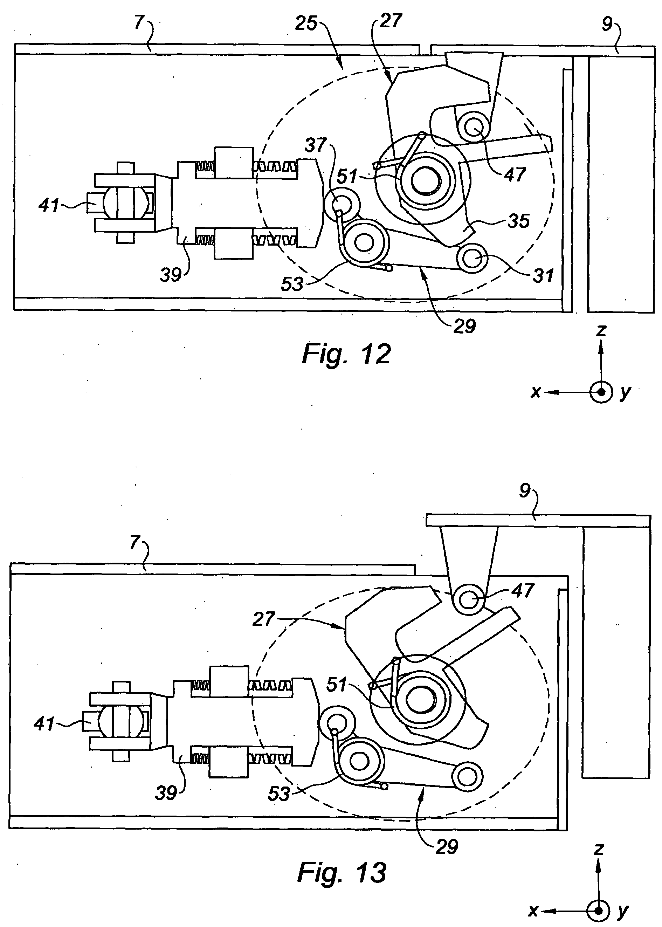

On se reporte à présent aux figures 12 à 15, sur lesquelles on a représenté un autre mode de réalisation du système de verrouillage selon l'invention.

Comme on pourra le comprendre en voyant le système d'axe XYZ représenté sur ces figures, le pivotement du crochet 27 et du loquet 29 s'effectue à présent autour d'axes parallèles à la direction Y.

En d'autres termes, dans le présent mode de réalisation, la rotation du crochet 27 et du loquet 29 s'effectue autour d'axes sensiblement parallèles aux axes de rotation 11 et 13 des portes amont 7 et aval 9, alors que dans le mode de réalisation précédent, les axes de rotation du crochet 27 et du loquet 29 étaient sensiblement perpendiculaires aux axes de rotation 11 et 13 des portes 7 et 9, et à l'axe A de la nacelle.

Comme dans le mode de réalisation précédent, une extension 41 de la tige du vérin 43 a pour effet de pousser sur la tête 37 du loquet 29, à l'encontre du ressort spirale 53, entraînant ainsi une rotation sur le loquet dans le sens horaire et libérant par la même la queue 35 du crochet 27, lequel peut alors pivoter sous l'action du ressort spirale 51 dans le sens anti-horaire, libérant ainsi le pion 47 solidaire de la porte aval 9 (voir figures 12 et 13).

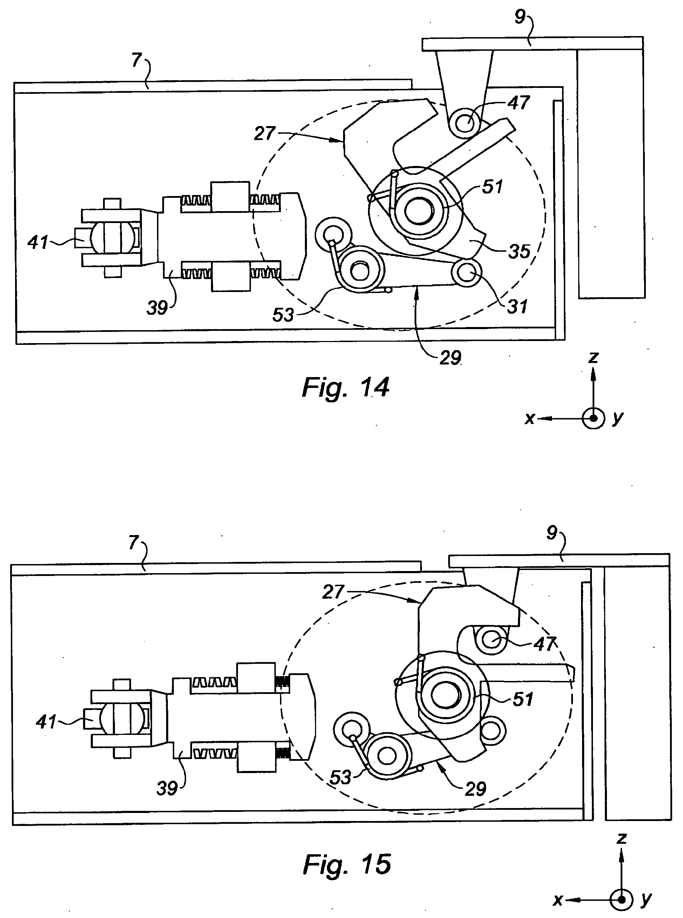

Lorsque la tige 41 du vérin 43 se rétracte, il provoque donc la refermeture de la porte aval 9 sur la porte amont 7 par le truchement des bielles 45a, et 45b, et le pion 47 vient se reloger à l'intérieur du crochet 27, entraînant ainsi le pivotement de celui-ci dans le sens horaire à l'encontre du ressort spirale 51, jusqu'à ce que la queue 35 de ce crochet passe outre la queue 31 de ce loquet 29 (voir figures 14 et 15), permettant ainsi de bloquer à nouveau le pion 47 dans une position correspondant à la configuration « jet direct » de la nacelle.

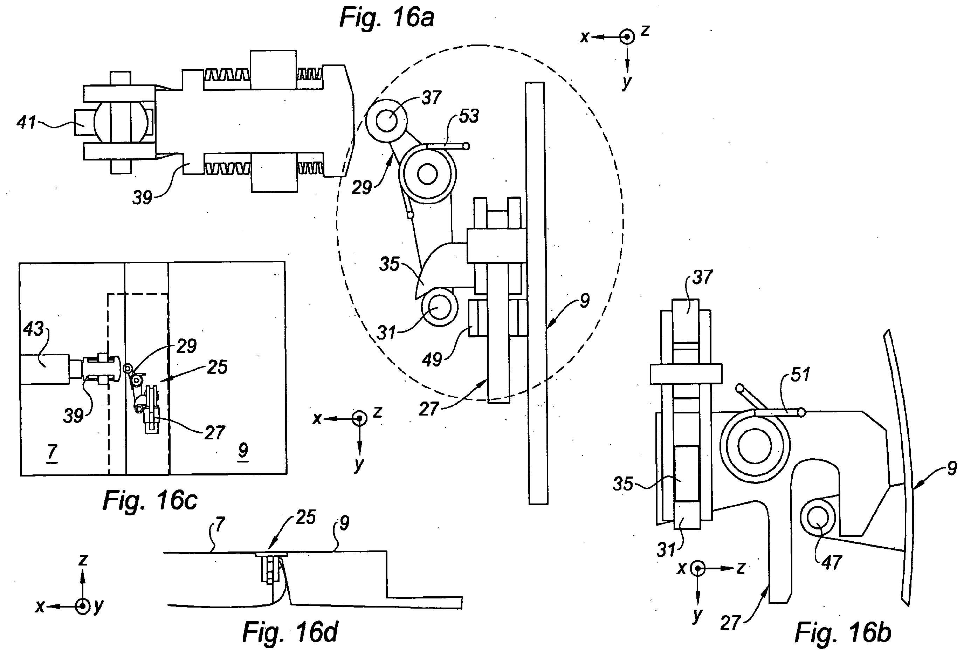

Le mode de réalisation des figures 16 à 20 diffère des deux précédents, en ceci que le crochet 27 est à présent monté pivotant sur la porte amont 7 autour d'un axe sensiblement parallèle à l'axe A de la nacelle, le loquet 29 étant quant à lui disposé sensiblement comme dans le premier mode de réalisation décrit plus haut.

Dans le cadre de cet agencement particulier, la queue 35 du crochet 27 s'étend selon une direction sensiblement parallèle au plan médian de ce crochet, c'est-à-dire selon une direction sensiblement parallèle à l'axe A de la nacelle (direction X).

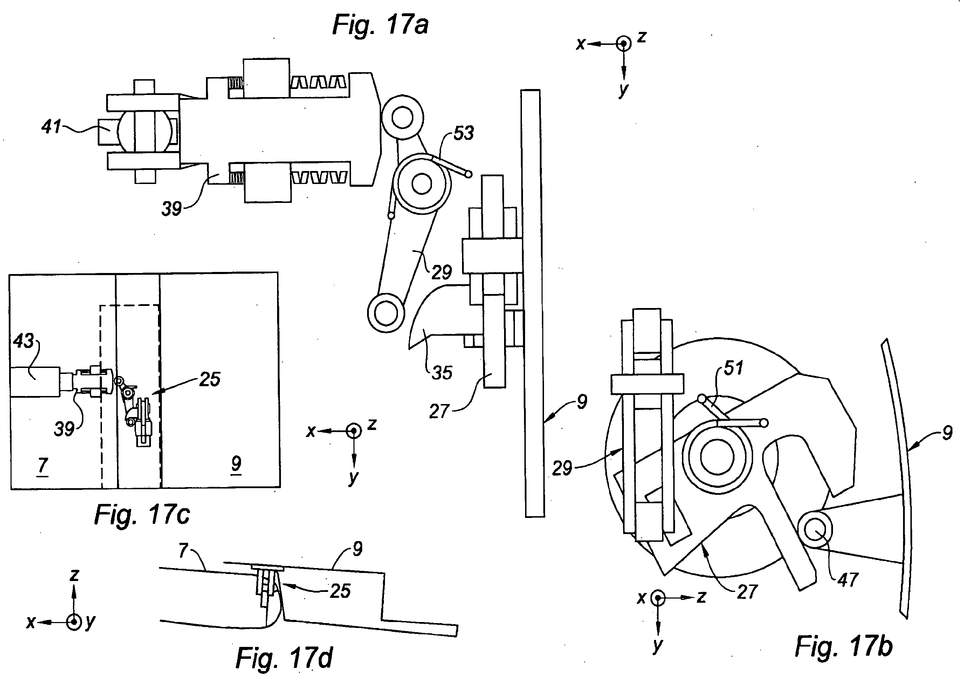

Comme dans les deux modes de réalisation précédents, la poussée exercée par le coulisseau 39 sur la tête 37 du loquet 29, lors de l'extension de la tige 41 du vérin 43, a pour effet de dégager la queue 31 du loquet 29 de celle 35 du crochet 47 (voir figures 16 et 17), libérant ainsi le pion 47, permettant par là-même l'ouverture des deux portes jumelles 7 et 9.

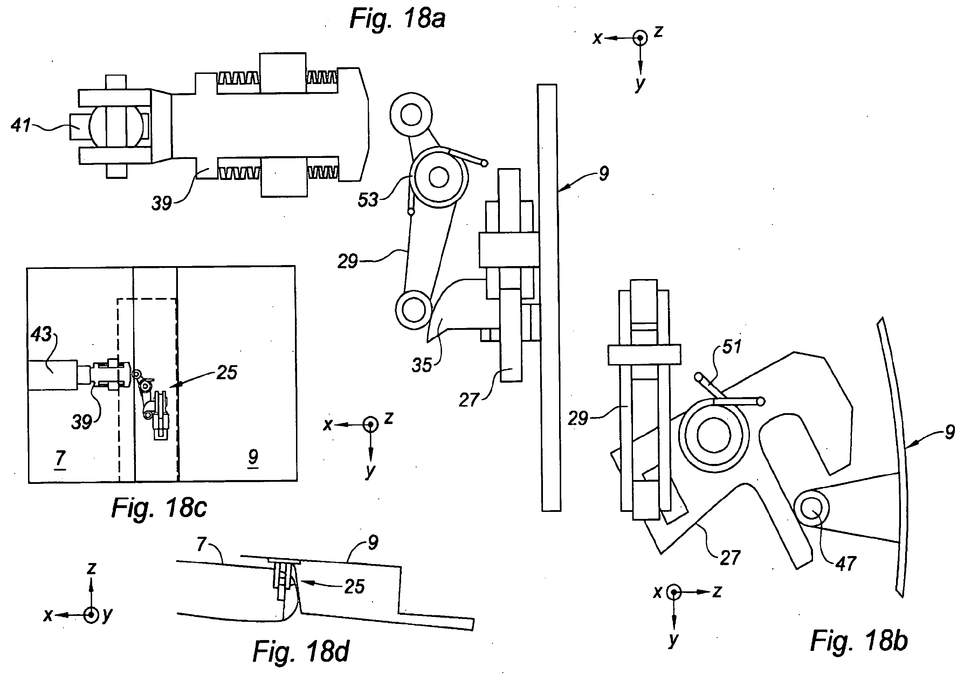

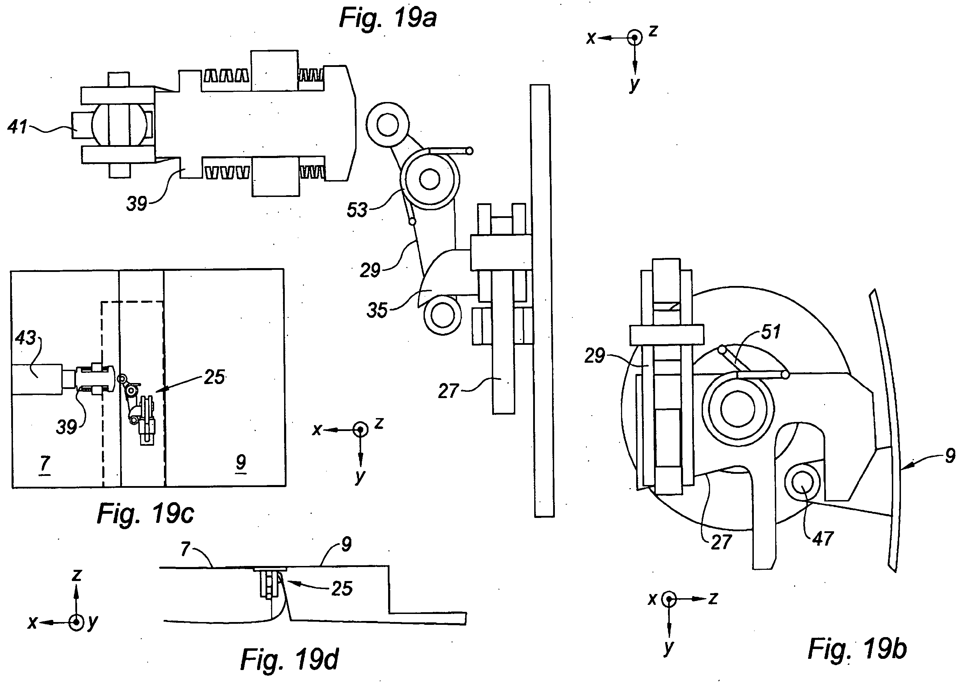

Lorsque la tige 41 du vérin 43 se rétracte (voir figures 18), les deux portes jumelles 7 et 9 se referment, ramenant ainsi le pion 47 au contact du crochet 27 qu'il fait pivoter dans le sens horaire à l'encontre de l'effort exercé par le ressort spirale 51, jusqu'à ce que la queue 35 de ce crochet 27 franchisse la queue 31 du loquet 29 (voir figures 19), assurant ainsi le verrouillage des deux portes amont 7 et aval 9 l'une par rapport à l'autre.

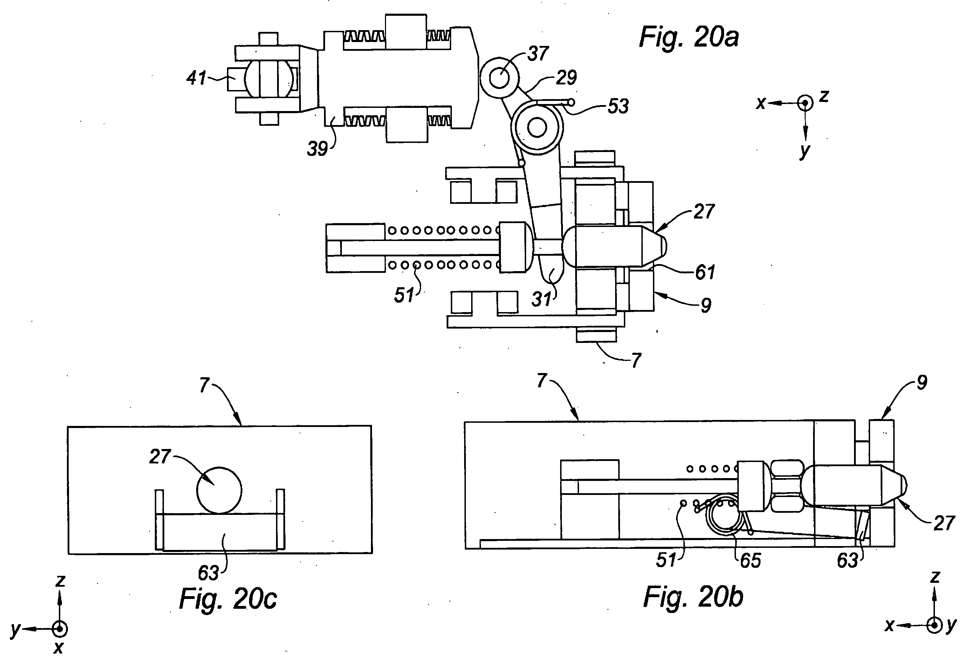

On se reporte à présent aux figures 20 à 26, sur lesquelles on a représenté encore un autre mode de réalisation du système de verrouillage selon l'invention.

Comme on peut le voir, dans ce mode de réalisation, on prévoit un pêne 27 monté coulissant à l'intérieur de la porte amont 7, à l'encontre d'un ressort hélicoïdal 51.

Les déplacements du pêne 27 s'effectuent sensiblement selon la direction X, c'est-à-dire parallèlement à l'axe A de la nacelle.

Ce pêne 27 est susceptible de se mouvoir à l'encontre du ressort hélicoïdal 51 sous l'action de la queue 31 du loquet 29, lorsque celui-ci est actionné dans le sens horaire par le coulisseau 39 monté à l'extrémité de la tige 41 du vérin 43. Cette queue 31 pourra avantageusement présenter une forme en étrier pour entourer le pêne 27.

La configuration des figures 20a, 20b, 20c correspond à la configuration « jet direct », dans laquelle on souhaite donc que les portes amont 7 et aval 9 soient bloquées l'une par rapport à l'autre.

Dans cette configuration, le ressort 51 est en extension complète, de sorte que l'extrémité aval du pêne 27 dépasse du bord aval de la porte 7, et pénètre dans une gâche 61 (c'est-à-dire dans un orifice correspondant) formée sur le bord amont de la porte 9.

De la sorte, le pêne 27, qui travaille en cisaillement, empêche tout mouvement relatif du bord amont de la porte aval 9 par rapport au bord aval de la porte amont 7.

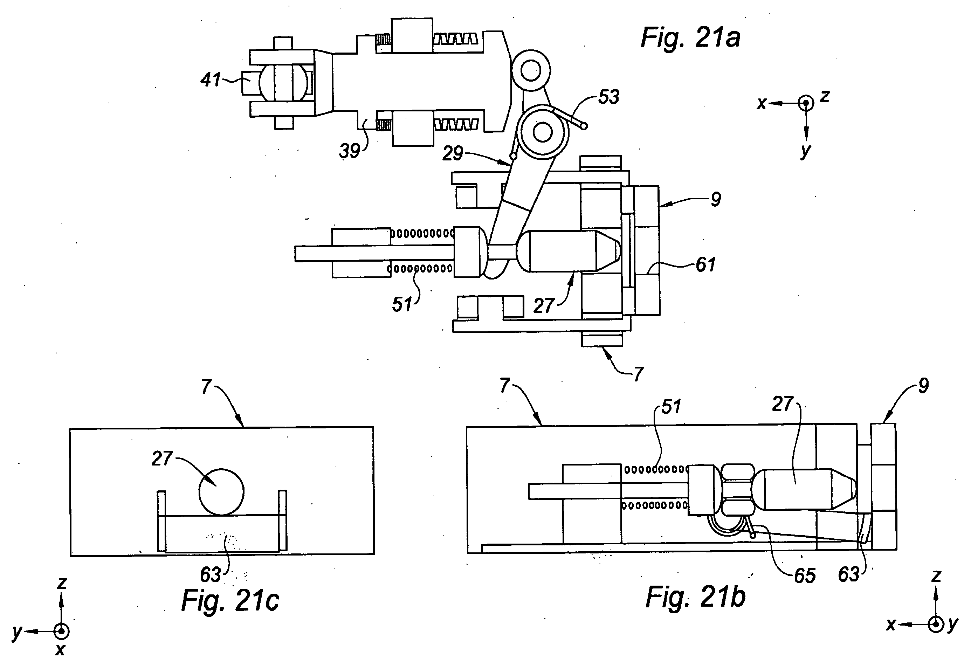

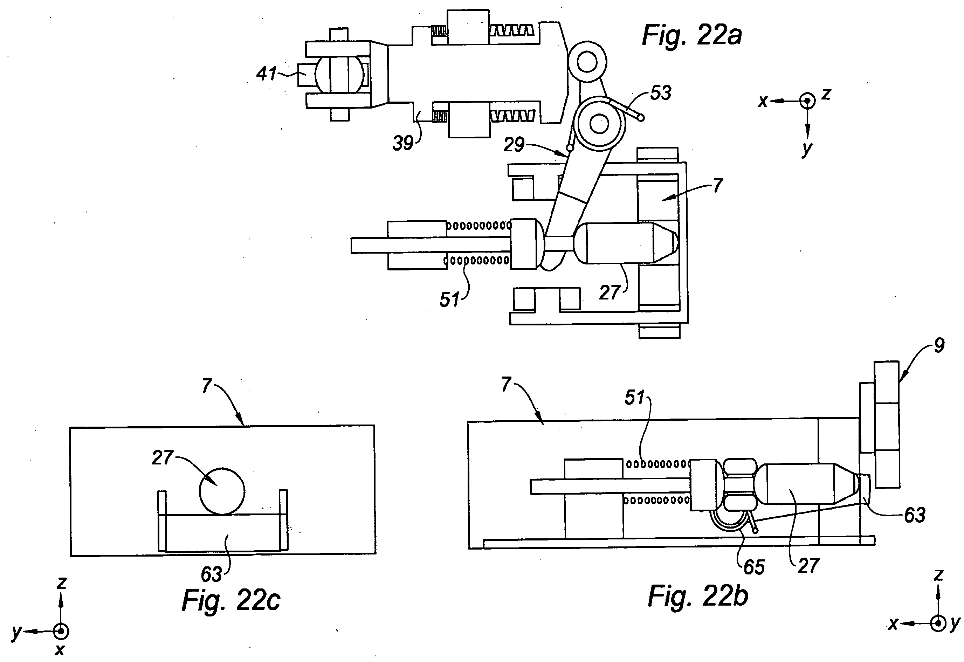

Lorsque l'on souhaite procéder à l'ouverture sur des portes jumelles, on agit donc sur le vérin 43 de manière à procéder à l'extension de sa tige 41, ce qui a pour effet de faire pivoter le loquet 29 dans le sens horaire, et ainsi de translater le pêne 27, de sorte qu'il comprime le ressort hélicoïdal 51, et ne dépasse ainsi plus du bord aval de la porte amont 7 : on libère ainsi la gâche 61, de sorte que le bord amont de la porte aval 9 n'est plus verrouillé par rapport au bord aval de la porte amont 7 (voir figures 21a, 21b, 21c) et l'on peut ainsi procéder à l'ouverture des deux portes (voir figures 22a, 22b, 22c).

Lors de cette ouverture, un étrier 63, monté pivotant autour d'un axe sensiblement parallèle aux axes de rotation 11 et 13 des portes amont 7 et aval 9, bascule autour de son axe sous l'action d'un ressort spirale 65 jusqu'à ce qu'il vienne empêcher que le pêne 27 ne ressorte du bord aval de la porte amont 7.

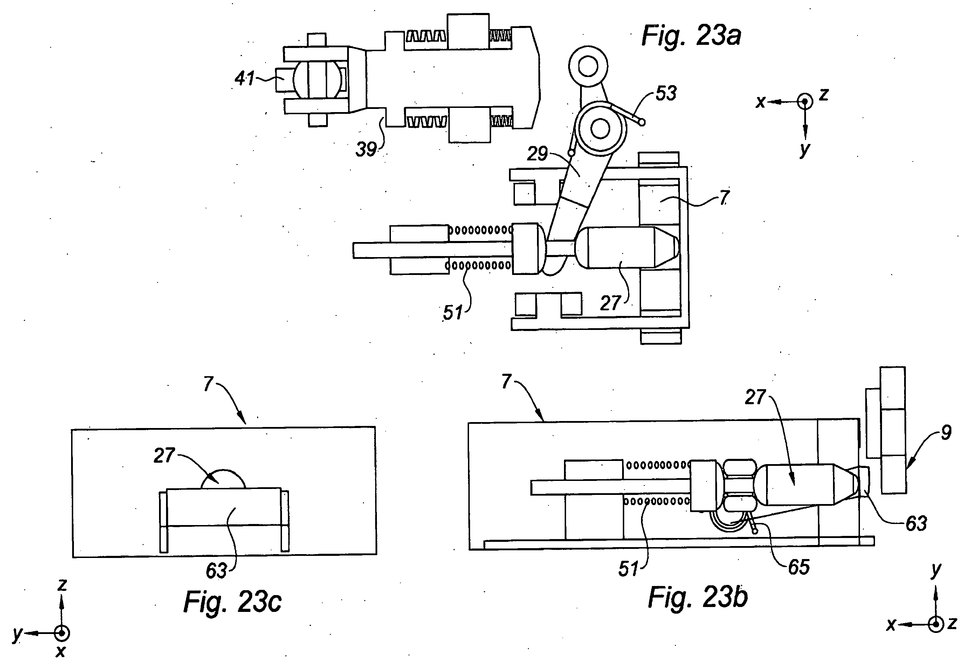

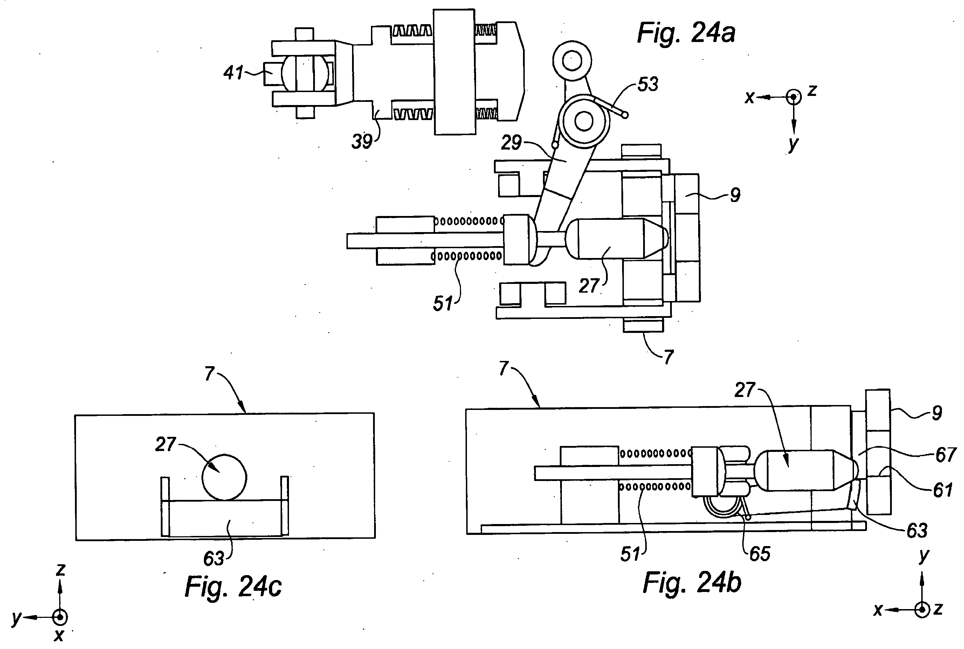

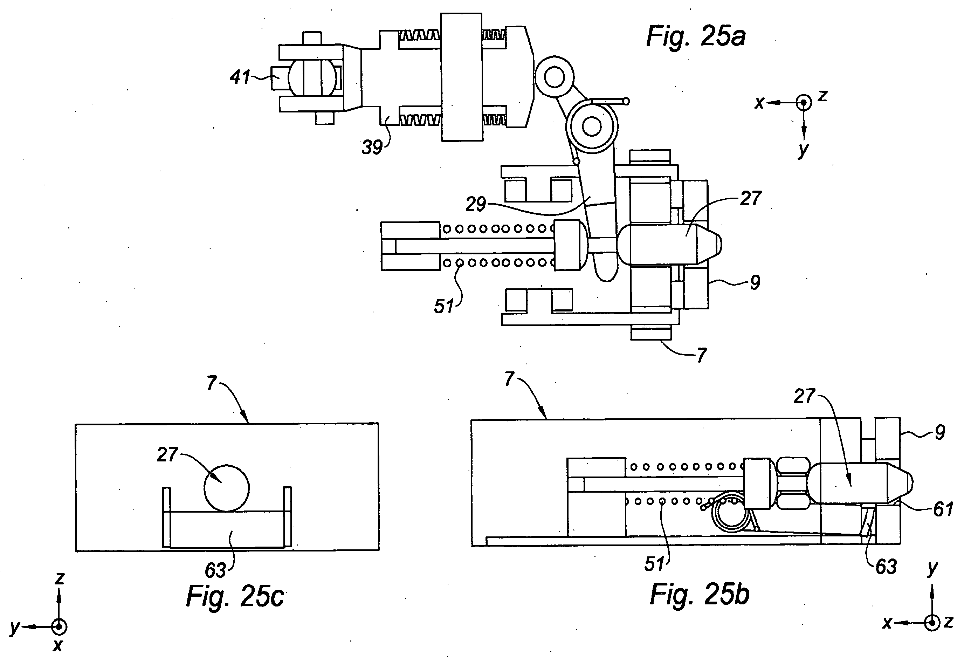

Lorsque l'on souhaite refermer les deux portes 7 et 9 de l'inverseur de poussée, on rétracte la tige 41 du vérin 43, comme cela est visible sur la figure 23, ce qui a pour effet de ramener la porte aval 9 jusqu'à une position où elle appuie, par l'intermédiaire d'un organe d'appui 67, sur l'étrier 63 (voir notamment figures 24b et 24c), entraînant ainsi le pivotement de cet étrier 63 à l'encontre de son ressort spirale 55, et ce, jusqu'à ce que le pêne 27 soit libéré et se loge à nouveau à l'intérieur de la gâche 61, sous l'action de son ressort hélicoïdal 51, comme cela est visible notamment sur les figures 25a, 25b et 25c.

Lorsque le pêne 27 a retrouvé cette position, il assure de nouveau le blocage relatif des portes amont 7 et aval 9, et donc le parfait maintien de l'inverseur de poussée dans sa configuration « jet direct » (voir figure 1).

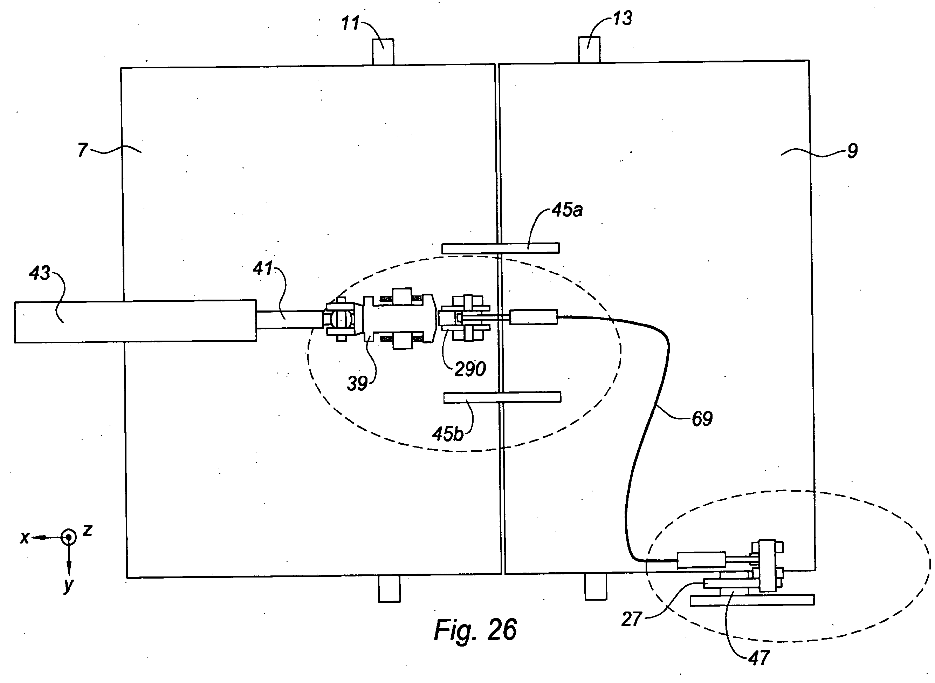

On se reporte à présent aux figures 26 à 34, sur lesquelles on a représenté encore un autre mode de réalisation du système de verrouillage selon l'invention.

Ce mode de réalisation diffère des trois premiers modes de réalisation décrits précédemment en ceci que le pion 47 est à présent monté sur la structure fixe de l'inverseur de poussée, au voisinage du bord aval de la porte aval 9.

Le crochet 27 est quant à lui monté sur la porte aval 9, au droit du pion 47, pivotant sur un axe sensiblement parallèle aux axes 11 et 13 des deux portes.

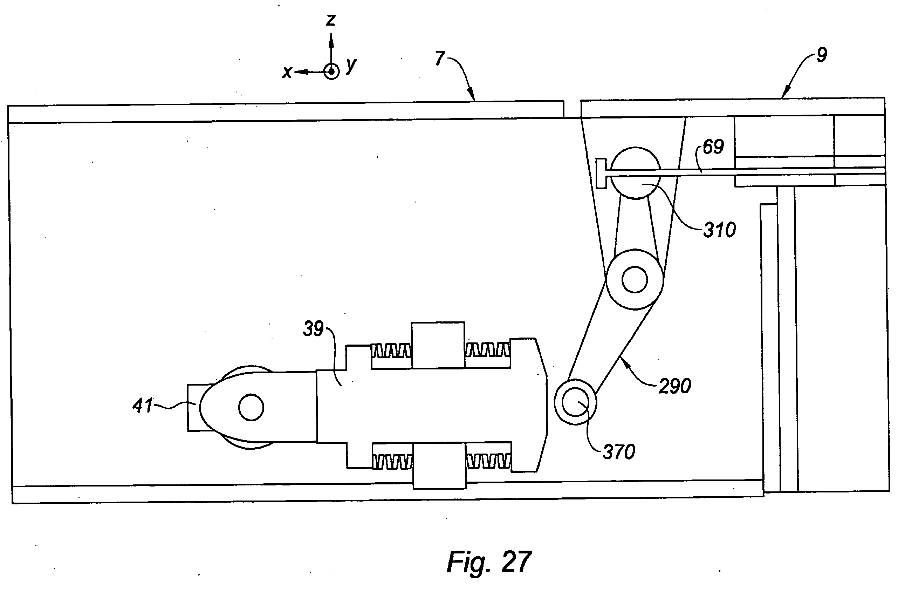

Comme cela et visible à la figure 27, un premier loquet 290 est monté pivotant sur le volet aval 9, autour d'un axe sensiblement parallèle aux axes de rotation des deux portes amont 7 et aval 9.

La tête 370 de ce premier loquet 290 est susceptible d'être actionnée par le coulisseau 39 monté à l'extrémité de la tige 41 du vérin 43.

La queue 310 de ce premier loquet 290 coopère avec un câble 69 monté coulissant par rapport à la porte aval 9, et s'étendant jusqu'à un deuxième loquet 29, monté pivotant autour d'un axe sensiblement parallèle aux axes 11 et 13 de la porte aval 9, à l'encontre d'un ressort spirale 53.

La tête 37 de ce loquet 29 coopère avec le câble 69, et la queue 31 de ce loquet 29 coopère avec une queue 35 du crochet 27, de manière analogue à ce qui a été exposé pour les modes de réalisation précédents.

Plus précisément, en position de verrouillage des deux portes 7 et 9, le coulisseau 39 n'exerce aucun effort sur la tête 370 du premier loquet 290, de sorte que la queue 31 du deuxième loquet 29 bloque la queue 35 du cochet 27, empêchant ce dernier de pivoter, et donc de se désengager du pion 47 solidaire de la structure fixe de la nacelle : la porte aval 9, et par là-même la porte amont 7 (par le truchement de bielles 45a et 45b) ne peuvent donc s'ouvrir.

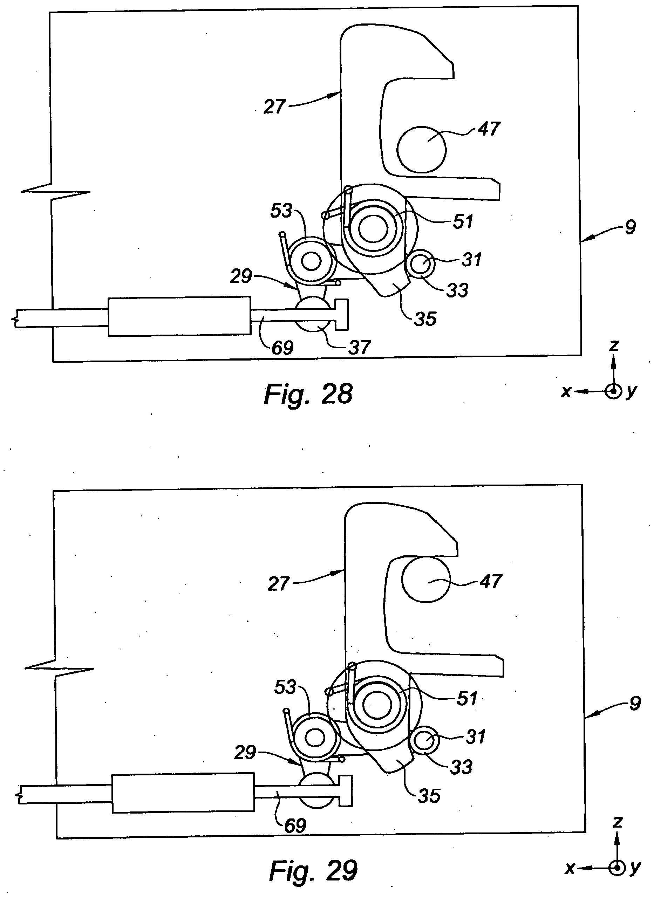

Les figures 29 montrent le crochet 27 venant en butée contre le pion 47, lors d'une tentative d'ouverture intempestive.

Lorsque l'on souhaite procéder à l'ouverture des portes amont 7 et aval 9, on procède à l'extension de la tige 41 du vérin 43, ce qui a pour effet de déplacer le coulisseau 39 qui vient faire pivoter le premier loquet 290 dans le sens inverse des aiguilles d'une montre.

Ce faisant, un effort de traction est exercé sur le câble 69 par la queue 310 de ce loquet 290.

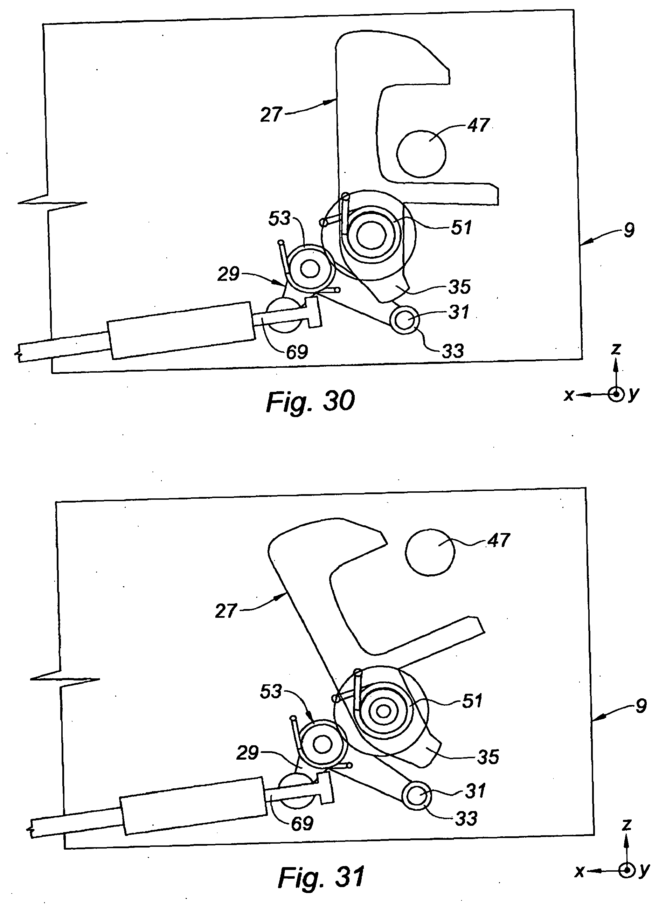

Cet effort de traction a pour effet de faire pivoter le deuxième loquet 29 dans le sens des aiguilles d'une montre, et ainsi de libérer la queue 35 du crochet 27, comme cela est visible à la figure 30. Sous l'effet du ressort spirale 51, le crochet 27 pivote alors dans le sens anti-horaire, libérant ainsi le pion 47 solidaire de la structure fixe de l'inverseur de poussée (voir figure 31) : les deux portes 7 et 9 peuvent alors s'ouvrir.

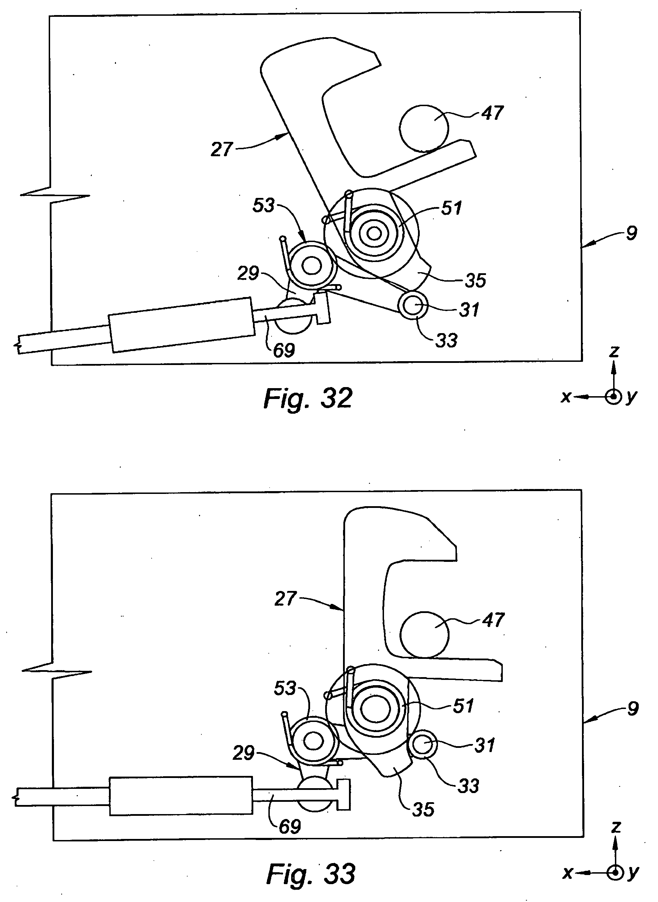

Lorsque l'on souhaite refermer ces deux portes, on rétracte la tige 41 du vérin 43, ce qui a pour effet de ramener le crochet 7 au contact du pion 47 (voir figure 32) et ainsi de faire pivoter ce crochet 27 à l'encontre du ressort 51 jusqu'à ce que la queue 35 de ce crochet franchisse la queue 31 du deuxième loquet 29 et se retrouve ainsi dans la position de verrouillage représentée à la figure 33, dans laquelle les deux portes 7 et 9 sont parfaitement immobilisées.

Comme l'on peut le comprendre à la lumière de la description qui précède, la présente invention fournit un système de verrouillage des deux portes jumelles qui est totalement indépendant des autres systèmes de verrouillage (verrouillage primaire et verrouillage synchronisé), sans qu'il soit nécessaire de prévoir aucun moyen de commande spécifique supplémentaire.

Comme on l'aura compris à la lumière de la description qui précède, et notamment à l'examen de la figure 11, seuls les verrous primaires VPa, VPb, VPc, VPd sont commandés par l'unité PLCU, les autres verrous 25a, 25b, 25c, 25d et VSa, VSb, étant quant à eux actionnés du seul fait de la mise en mouvement des portes jumelles par les vérins 43a, 43b, 43c, 43d.

Ainsi, pour un inverseur de poussée comportant quatre paires de portes jumelles comme représenté à la figue 11, seuls quatre verrous VPa, VPb, VPc, VPd nécessitent des moyens de commande, ce qui est extrêmement avantageux en termes de poids, de coût et de facilité de maintenance.

Bien entendu, la présente invention n'est nullement limitée aux modes de réalisation décrits et représentés, fournis à titre de simples exemples.

## Revendications

1. Inverseur de poussée pour nacelle de turboréacteur d'aéronef, comprenant :
- au moins une paire de portes jumelles comprenant une porte amont (7), une porte aval (9) reliée par au moins une bielle (45a, 45b) à la porte amont (7), et
- au moins un vérin d'actionnement (43) de la porte amont (7), entre une position « jet direct » dans laquelle ces deux portes sont fermées, et une position « jet inversé » dans laquelle ces deux portes sont ouvertes et aptes à défléchir au moins une partie (I) du flux d'air froid susceptible de circuler à l'intérieur de la nacelle, et
- des moyens (25) pour verrouiller/déverrouiller lesdites portes amont et aval entre elles sous la seule action dudit vérin (43).

2. Inverseur de poussée selon la revendication 1, dans lequel lesdits moyens de verrouillage/déverrouillage comprennent :
- un crochet (27) monté pivotant sur ladite porte amont (7), entre une position de verrouillage d'un pion (47) solidaire de ladite porte aval (9), et une position de déverrouillage de ce pion (47),
- des moyens de rappel élastique (51) dudit crochet vers sa position de verrouillage,
- un loquet (29) monté pivotant sur ladite porte amont (7) entre une position de blocage dans laquelle il maintient ledit crochet (27) dans sa position de verrouillage, et une position de déblocage, dans laquelle il autorise le passage dudit crochet (27) de sa position de verrouillage à sa position de déverrouillage,
- des moyens de rappel élastique (53) dudit loquet (29) vers sa position de blocage,
- ledit vérin (43) et ledit loquet (29) étant agencés l'un par rapport à l'autre de sorte qu'une extension dudit vérin (43) fasse pivoter ledit loquet (29) vers sa position de déblocage.

3. Inverseur de poussée selon la revendication 2, dans lequel ledit crochet (27) et ledit loquet (29) sont montés pivotants autour d'axes sensiblement perpendiculaires aux axes de rotation (11, 13) des portes amont (7) et aval (9) et à l'axe (A) de la nacelle.

4. Inverseur de poussée selon la revendication 2, dans lequel ledit crochet (27) et ledit loquet (29) sont montés pivotants autour d'axes sensiblement parallèles aux axes de rotation (11) des portes amont (7) et aval (9).

5. Inverseur de poussée selon la revendication 2, dans lequel ledit crochet (27) est monté pivotant autour d'un axe sensiblement parallèle à l'axe (A) de la nacelle, et ledit loquet (29) est monté pivotant autour d'un axe sensiblement perpendiculaire aux axes de rotation (11, 13) des portes amont (7) et aval (9) et à l'axe (A) de la nacelle.

6. Inverseur de poussée selon la revendication 1, dans lequel lesdits moyens de verrouillage/déverrouillage comprennent :
- un pêne (27) monté coulissant dans ladite porte amont (7), entre une position de verrouillage d'une gâche (61) formée dans ladite porte aval (9), et une position de déverrouillage de cette gâche (61),
- des moyens de rappel élastique (51) dudit pêne (27) vers sa position de verrouillage,
- un loquet (29) monté pivotant sur ladite porte amont (7) et coopérant avec ledit pêne (27) de sorte qu'une rotation de ce loquet (29) ait pour effet de faire coulisser ce pêne (27),
- ledit vérin (43) et ladite gâchette (29) étant agencés l'un par rapport à l'autre de sorte qu'une extension dudit vérin (43) fasse pivoter ledit loquet (29) dans un sens provoquant le coulissement dudit pêne (27) vers sa position de déverrouillage.

7. Inverseur de poussée selon la revendication 6, dans lequel lesdits moyens de verrouillage/déverrouillage comprennent en outre un étrier (63) monté pivotant sur ladite porte amont (7) autour d'un axe sensiblement parallèle aux axes de rotation (11, 13) desdites portes amont (7) et aval (9), et des moyens élastiques (65) rappelant cet étrier vers une position dans laquelle il assure le maintien dudit pêne (27) dans sa position de déverrouillage.

8. Inverseur de poussée selon la revendication 7, dans lequel ladite porte aval (9) comprend un organe d'appui (67), apte à faire pivoter ledit étrier (63) à l'encontre desdits moyens élastiques (65).

9. Inverseur de poussée selon la revendication 1, dans lequel lesdits moyens de verrouillage/déverrouillage comprennent :
- un crochet (27) monté pivotant sur ladite porte aval (9), entre une position de verrouillage d'un pion (47) solidaire de la structure fixe dudit inverseur, et une position de déverrouillage de ce pion (47),
- des moyens de rappel élastique (51) dudit crochet (27) vers sa position de verrouillage,
- un loquet (29) monté pivotant sur ladite porte aval (9) entre une position de blocage dans laquelle il maintient ledit crochet (27) dans sa position de verrouillage, et une position de déblocage, dans laquelle il autorise le passage dudit crochet (27) de sa position de verrouillage à sa position de déverrouillage,
- des moyens de rappel élastique (53) dudit loquet (29) vers sa position de blocage,
- un câble (69) dont une extrémité est montée coulissante sur ladite porte amont (7), et dont l'autre extrémité est reliée audit loquet (29), de sorte qu'une extension dudit vérin (43) provoque le coulissement dudit câble (69) par rapport à ladite porte amont (7), et ainsi la rotation dudit loquet (29) vers sa position de déblocage.

10. Nacelle équipée d'un inverseur de poussée conforme à l'une quelconque des revendications précédentes.

## Patentansprüche

1. Schubumkehr für Triebwerksgondel eines Luftfahrzeugs, folgendes umfassend:
- zumindest ein Doppeltürenpaar, eine Tür (7) stromaufwärts und eine Tür (9) stromabwärts umfassend, die durch zumindest eine Antriebsstange (45a, 45b) mit der stromaufwärts befindlichen Tür (7) verbunden ist, und
- zumindest einen Zylinder zum Betätigen (43) der stromaufwärts befindlichen Tür (7), zwischen einer "Direktstrahl" Position, in der diese beiden Türen geschlossen sind, und einer "Umkehrstrahl" Position, in der diese beiden Türen offen und in der Lage sind, zumindest einen Teil (I) der kalten Luftströmung abzulenken, die imstande ist, im Inneren der Gondel zu zirkulieren, und
- Mittel (25) zum Verriegeln/Freigeben der besagten stromaufwärts und stromabwärts befindlichen Türen zueinander nur durch die Betätigung des besagten Zylinders (43).

2. Schubumkehr nach Anspruch 1, wobei die besagten Mittel zum Verriegeln/Freigeben folgendes umfassen:
- einen Haken (27), der auf der besagten stromaufwärts befindlichen Tür (7) zwischen einer Position zum Verriegeln eines Stifts (47), der fest mit der besagten stromabwärts befindlichen Tür (9) verbunden ist, und einer Position zum Freigeben dieses Stifts (47) schwenkbar montiert ist,
- elastische Mittel zum Rückholen (51) des besagten Hakens in seine Verriegelungsposition,
- ein Schnappschloss (29), das auf der besagten stromaufwärts befindlichen Tür (7) zwischen einer Blockierposition, in der es den besagten Haken (27) in seiner Verriegelungsposition hält, und einer Freigabeposition schwenkbar montiert ist, in der es den Übergang des besagten Hakens (27) von seiner Verriegelungsposition in seine Freigabeposition zulässt,
- elastische Mittel zum Rückholen (53) des besagten Schnappschlosses (29) in seine Blockierposition,
- wobei der besagte Zylinder (43) und das besagte Schnappschloss (29) derart zueinander angeordnet sind, dass ein Ausfahren des besagten Zylinders (43) das besagte Schnappschloss (29) in dessen Freigabeposition schwenken lässt.

3. Schubumkehr nach Anspruch 2, wobei der besagte Haken (27) und das besagte Schnappschloss (29) um Achsen schwenkbar montiert sind, die in etwa senkrecht zu den Drehachsen (11, 13) der stromaufwärts (7) und der stromabwärts (9) befindlichen Tür und zur Achse (A) der Gondel verlaufen.

4. Schubumkehr nach Anspruch 2, wobei der besagte Haken (27) und das besagte Schnappschloss (29) um Achsen schwenkbar montiert sind, die in etwa parallel zu den Drehachsen (11) der stromaufwärts (7) und der stromabwärts (9) befindlichen Tür verlaufen.

5. Schubumkehr nach Anspruch 2, wobei der besagte Haken (27) um eine Achse schwenkbar montiert ist, die in etwa parallel zur Achse (A) der Gondel verläuft, und das besagte Schnappschloss (29) um eine Achse schwenkbar montiert ist, die in etwa senkrecht zu den Drehachsen (11, 13) der stromaufwärts (7) und der stromabwärts (9) befindlichen Tür und zur Achse A der Gondel verläuft.

6. Schubumkehr nach Anspruch 1, wobei die besagten Mittel zum Verriegeln/Freigeben folgendes umfassen:
- einen Riegel (27), der in der besagten stromaufwärts befindlichen Tür (7) zwischen einer Verriegelungsposition einer Schließklappe (61), die in der besagten stromabwärts befindlichen Tür (9) ausgeführt ist, und einer Freigabeposition dieser Schließklappe (61) gleitend montiert ist,
- elastische Mittel zum Rückholen (51) des besagten Riegels (27) in seine Verriegelungsposition,
- ein Schnappschloss (29), das schwenkbar auf der besagten stromaufwärts befindlichen Tür (7) und mit dem besagten Riegel (27) zusammenwirkend montiert ist, damit eine Rotation dieses Schnappschlosses (29) dazu führt, diesen Riegel (27) zu verschieben,
- wobei der besagte Zylinder (43) und die besagte Zuhaltung (29) derart zueinander angeordnet sind, dass ein Ausfahren des besagten Zylinders (43) das besagte Schnappschloss (29) in eine Richtung schwenken lassen, die zum Verschieben des besagten Riegels (27) in seine Freigabeposition führt.

7. Schubumkehr nach Anspruch 6, wobei die besagten Mittel zum Verriegeln/Freigeben darüber hinaus einen Klemmbügel (63) umfassen, der um eine Achse schwenkbar auf der besagten stromaufwärts befindlichen Tür (7) montiert ist, die in etwa parallel zu den Drehachsen (11, 13) der besagten stromaufwärts befindlichen (7) und der stromabwärts befindlichen (9) Tür verläuft, und elastische Mittel (65) zum Rückholen dieses Klemmbügels in eine Position, in der er dafür sorgt, dass der besagte Riegel (27) in seiner Freigabeposition bleibt.

8. Schubumkehr nach Anspruch 7, wobei die besagte stromabwärts befindliche Tür (9) ein Auflageorgan (67) umfasst, das in der Lage ist, den besagten Klemmbügel (63) entgegen die besagten elastischen Mittel (65) schwenken zu lassen.

9. Schubumkehr nach Anspruch 1, wobei die besagten Mittel zum Verriegeln/Freigeben folgendes umfassen:
- einen Haken (27), der auf der besagten stromabwärts befindlichen Tür (9) zwischen einer Position zum Verriegeln eines Stifts (47), der fest mit der festen Struktur der Umkehr verbunden ist, und einer Position zum Freigeben dieses Stifts (47) schwenkbar montiert ist,
- elastische Mittel zum Rückholen (51) des besagten Hakens (27) in seine Verriegelungsposition,
- ein Schnappschloss (29), das auf der besagten stromabwärts befindlichen Tür (9) zwischen einer Blockierposition, in der es den besagten Haken (27) in seiner Verriegelungsposition hält, und einer Freigabeposition schwenkbar montiert ist, in der es den Übergang des besagten Hakens (27) von seiner Verriegelungsposition in seine Freigabeposition zulässt,
- elastische Mittel zum Rückholen (53) des besagten Schnappschlosses (29) in seine Blockierposition,
- ein Kabel (69), von dem ein Ende gleitend auf der besagten stromaufwärts befindlichen Tür (7) montiert ist, und dessen anderes Ende mit dem besagten Schnappschloss (29) verbunden ist, sodass ein Ausfahren des besagten Zylinders (43) für ein Verschieben des besagten Kabels (69) im Verhältnis zur besagten stromaufwärts befindlichen Tür (7), und somit für die Rotation des besagten Schnappschlosses (29) in dessen Freigabeposition sorgt.

10. Gondel, die mit einer Schubumkehr nach irgendeinem der vorherigen Ansprüche ausgestattet ist.

## Claims

1. A thrust reverser for an aircraft turbojet engine nacelle, comprising :
- at least one pair of twin doors comprising an upstream door (7), a downstream door (9) connected by at least one connecting rod (45a, 45b) to the upstream door (7), and
- at least one actuating cylinder (43) of the upstream door (7) between a « direct jet » position wherein these two doors are closed, and a « reverse jet » position wherein these two doors are open and adapted to deflect at least a portion (I) of the cold air flow likely to circulate inside the nacelle, and
- means (25) for locking/unlocking said upstream and downstream doors together under the sole action of said cylinder (43).

2. The thrust reverser according to claim 1, wherein said locking/unlocking means comprise :
- a hook (27) pivotally mounted on said upstream door (7), between a locked position of a pin (47) secured to said downstream door (9), and an unlocked position of this pin (47),
- means (51) for elastically returning said hook to its locked position,
- a latch (29) pivotally mounted on said upstream door (7) between a blocking position wherein it holds said hook (27) in its locked position, and a release position, wherein it allows said hook (27) to switch from its locked position to its unlocked position,
- means (53) for elastically returning said latch (29) to its blocking position,
- said cylinder (43) and said latch (29) being arranged relative to each other so that an extension of said cylinder (43) makes said latch (29) pivot toward its release position.

3. The thrust reverser according to claim 2, wherein said hook (27) and said latch (29) are pivotally mounted about axes substantially perpendicular to the axes of rotation (11, 13) of the upstream (7) and downstream (9) doors and to the axis (A) of the nacelle.

4. The thrust reverser according to claim 2, wherein said hook (27) and said latch (29) are pivotally mounted about axes substantially parallel to the axes of rotation (11) of the upstream (7) and downstream (9) doors.

5. The thrust reverser according to claim 2, wherein said hook (27) is pivotally mounted about an axis substantially parallel to the axis (A) of the nacelle, and said latch (29) is pivotally mounted about an axis substantially perpendicular to the axes of rotation (11, 13) of the upstream (7) and downstream (9) doors and to the axis (A) of the nacelle.

6. The thrust reverser according to claim 1, wherein said locking/unlocking means comprise :
- a bolt (27) slidably mounted in said upstream door (7), between a locked position of a striker (61) formed in said downstream door (9), and an unlocked position of this striker (61),
- means (51) for elastically returning said bolt (27) to its locked position,
- a latch (29) pivotally mounted on said upstream door (7) and cooperating with said bolt (27) so that rotation of this latch (29) has the effect of making this bolt (27) slide,
- said cylinder (43) and said latch (29) being arranged relative to each other so that an extension of said cylinder (43) makes said latch (29) pivot in a direction causing said bolt (27) to slide toward its unlocked position.

7. The thrust reverser according to claim 6, wherein said locking/unlocking means further comprise a yoke (63) pivotally mounted on said upstream door (7) about an axis substantially parallel to the axes of rotation (11, 13) of said upstream (7) and downstream (9) doors, and elastic means (65) for returning this yoke to a position wherein it ensures maintaining said bolt (27) in its unlocked position.

8. The thrust reverser according to claim 7, wherein said downstream door (9) comprises a bearing member (67), adapted to pivot said yoke (63) against said elastic means (65).

9. The thrust reverser according to claim 1, wherein said locking/unlocking means comprise :
- a hook (27) pivotally mounted on said downstream door (9), between a locked position of a pin (47) secured to the fixed structure of said reverser, and an unlocked position of this pin (47),
- means (51) for elastically returning said hook (27) toward its locked position,
- a latch (29) pivotally mounted on said downstream door (9) between a blocking position wherein it maintains said hook (27) in its locked position, and a release position, wherein it allows said hook (27) to switch from its locked position to its unlocked position,
- means (53) for elastically returning said latch (29) to its blocking position,
- a cable (69) having one end slidably mounted on said upstream door (7), and another end connected to said latch (29), so that an extension of said cylinder (43) causes said cable (69) to slide relative to said upstream door (7), and, thus, said latch (29) to rotate toward its release position.

10. A nacelle fitted with a thrust reverser in accordance with any one of the preceding claims.
